# EUROPEAN PATENT SPECIFICATION

(11) **EP 1 693 263 B1**
(45) Date of publication and mention of the grant of the patent: **14.04.2010**
(21) Application number: 06002922.0
(22) Date of filing: 14.02.2006
(51) Int. Cl.: B60T 8/40

(54) **Electronically controlled hydraulic brake system**
Elektronisch geregeltes hydraulisches Bremssystem
Système de freinage hydraulique à commande électronique

(30) Priority: 17.02.2005 JP 2005040932
(43) Date of publication of application: 23.08.2006
(73) Proprietor: Toyota Jidosha Kabushiki Kaisha, Toyota-shi, Aichi-ken, 471-8571 (JP)
(72) Inventor: Yamamoto,Takayuki, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei

(56) References cited:
- EP-A- 1 013 529
- DE-A1- 3 843 570
- US-B1- 6 517 170

## Description

### BACKGROUND OF THE INVENTION

### 1. Field of the Invention

The present invention relates to a hydraulic brake system for an automotive vehicle, and particularly to an electronically controlled hydraulic brake system where a hydraulic pressure in a wheel cylinder of a brake for braking rotation of a wheel of an automotive vehicle is controlled by an electric control unit.

### 2. Description of Related Art

As disclosed in the specification of JP-A-2002-541010, there is known a type of an electronically controlled hydraulic brake system where an operating state of a brake operating member is detected by an operating state detecting device, and based on the detected operating state, a pressure in a front wheel cylinder for a front wheel, and a pressure in a rear wheel cylinder for a rear wheel, are controlled. That is, when the pressure of the wheel cylinders is to be increased, a brake fluid is supplied from a power-operated hydraulic pressure source to the front and rear wheel cylinders by operating a front pressure-increase valve and a rear pressure-increase valve, and when the pressure of the wheel cylinders is to be decreased, the brake fluid is discharged from the front and rear wheel cylinders to a reservoir by operating the front and rear pressure-decrease valves.

In the electronically controlled hydraulic brake system of this type, a low frequency noise sometimes occurs upon releasing of the brake operating member, in particular, when the brake operating member is abruptly released. Investigation of its cause has revealed that a pressure pulse in a front pressure-decrease passage that connects the front pressure-decrease valve with the reservoir is transmitted to a rear pressure-decrease passage that connects the rear pressure-decrease valve with the reservoir. It is presumed that this pulse transmission occurs in the following way
In a conventional electronically controlled hydraulic brake system, the front pressure-decrease passage and the rear pressure-decrease passage are connected to the reservoir such that the front and rear pressure-decrease passages merge at a merging point or a junction into a passage that is directly connected to the reservoir. In other words, the front pressure-decrease passage and the rear pressure-decrease passage have a common passage portion. Since the wheel cylinder of a front brake (hereinafter referred to as "front wheel cylinder") is larger than that of a rear brake ("hereinafter referred to as "rear wheel cylinder"), when the pressure is decreased in both the front and rear wheel cylinders at once in response to release of the brake operating member, a flow rate of the brake fluid discharged from the front wheel cylinder is higher than that from the rear wheel cylinder, and thus discharge of the brake fluid from the rear wheel cylinder is hampered by the brake fluid discharged from the front wheel cylinder. In this state, when a pressure pulse occurs at a restricting portion formed in the front pressure-decrease passage to have a cross-sectional area smaller than that of the other part of the front pressure-decrease passage, the pulse is transmitted from the common passage portion to the rear pressure-decrease passage, thereby generating the noise.
Alternatively, the pulse transmission to the rear pressure-decrease passage may be caused as follows. When the pressure is decreased in both the front and rear wheel cylinders at once, the fluid flow in the rear pressure-decrease passage merges with the fluid flow in the front pressure-decrease passage at the junction of the front and rear pressure-decrease passages. Upon this merging at this junction, a pressure pulse occurs and is transmitted more intensely to the rear pressure-decrease passage than to the front pressure-decrease passage since in the rear pressure-decrease passage the flow rate is lower than in the front pressure-decrease passage, or alternatively, a pressure pulse occurs in the front pressure-decrease passage and is transmitted more intensely to the rear pressure-decrease passage than to the front pressure-decrease passage since the flow rate is lower in the rear pressure-decrease passage than in the front pressure-decrease passage, thereby generating a noise discomforting an occupant or a driver of the vehicle.

Further, there is also a possibility that a pressure pulse is transmitted not only to the rear pressure-decrease passage but also to the front pressure-decrease passage, but a noise generated in the rear pressure-decrease passage is louder than a noise generated in the front pressure-decrease passage, or at least there is a tendency that the noise generated in the rear pressure-decrease passage discomforts the occupant or the driver more seriously than the noise generated in the front pressure-decrease passage does.
In any case, it is presumed that the cause of the noise is transmission of a pressure pulse from the brake fluid at the junction between the front pressure-decrease passage and the rear pressure-decrease massage to the brake fluid in the rear pressure-decrease passage.

US 6,517,170 B1, which is regarded as closest prior art forming the basis for the preamble of claim 1, shows a braking system which is dedicated to normally brake two front and two rear wheels with fluid provided by a combination of pump and accumulator (below shortend to "pump" for reasons of brevity). The pressure on the brake cylinder of the wheels is controlled in accordance with the stroke of a brake pedal measured by a pedal travel sensor. In case the pump should fail, a check valve between the junction of the line from the accumulator and the front wheel brake cylinders ensures that the pressure on the wheel brake cylinders solely provided by the the driver only acts on the front wheels, thus reducing the overall stroke (and power) input needed from the driver. During normal operation the check valve lets pass the pressure from the pump to the front wheel cylinders, and the rear wheel cylinders are directly connected to the pump.

DE 38 43 570 A1 discusses a damper integrated between the outputs of two pressure sources. In case of ABS, if the pressure in one line (e.g. line 18 connecting pump 10 via valve 2 with wheel brake cylinder 12) increases, plunger 16 is shifted to the left against the forces of springs 19, 20, thus decreasing said pressure and at the same time increasing pressure in line 17. Therefore an equal pressure can be realised at all wheels and pressure peaks can be dampened. Again, this application aims at the reduction of pressure pulsations deriving from the rounds of the pump.

### SUMMARY OF THE INTENTION

Based on the above-described presumptions, various experiments have been conducted in developing the present invention. It is an object of the invention, therefore, to provided an electronically controlled hydraulic brake system as specified in the appended claims.

The provision of the pulse transmission restraining means prevents, or at least reduces, the above-described generation of the noise upon releasing of the brake operating member.

There will be described by way of example advantages of the invention. It is to be understood that combinations of features of the invention are not limited by the appended claims only. That is, the invention is to be construed by taking account of the advantages described below, the description of the embodiments, and the other parts of the specification, and as long as the invention is constructed in this way, any embodiment falling under one of the appended claims may be implemented with one or more features added.

By having the front pressure-decrease passage and the rear pressure-decrease passage connected to the reservoir independently of each other so as not to include a portion common to both of the front and rear pressure-decrease passages, a pressure pulse occurring in the front pressure-decrease passage is absorbed by the reservoir and not transmitted to the rear pressure-decrease passage. Further, although there is a possibility that a pressure pulse occurs in the brake fluid at the junction between the front pressure-decrease passage and the rear pressure-decrease passage, as described above, the system prevents the occurrence of the pressure pulse at the junction, thereby preventing transmission of a pressure pulse to the rear pressure-decrease passage.
As described in the claims, the suction passage for the power-operated hydraulic pressure source sucking the brake fluid is included in one of the front pressure-decrease passage and the rear pressure-decrease passage, thereby simplifying a fluid passage structure of the system.
The subject matter of another claim is the same as the conventional arrangement in that the front pressure-decrease passage and the rear pressure-decrease passage have a common portion, but is different from the conventional arrangement in that the pressure pulse of the brake fluid is retrained from being transmitted to the rear pressure-decrease passage, by the pulse transmission restrainer disposed in at least one of the portion of the front pressure-decrease passage and the portion of the rear pressure-decrease passage which portions are respectively on the side of the front pressure-decrease valve and the rear pressure-decrease valve with respect to the junction where the front pressure-decrease passage and the rear pressure-decrease passage meet or merge. This further simplifies the fluid passage structure.
By providing a check valve in the rear pressure-decrease passage, the pulse transmission to the rear pressure-decrease passage is restrained. It is desirable that the check valve is disposed near the junction where the rear pressure-decrease passage meets or merges with the front pressure-decrease passage, so that the pulse is not transmitted to the most part of the rear pressure-decrease passage. The check valve may be of a type having a spring that biases a valve member toward a valve seat, or may be of another type not having a spring but a valve member thereof is seated on the valve seat by its own weight. In order to ensure a function of the check valve to prevent reverse flow, i.e., a pulse transmission restraining function of the check valve, the former type is preferable, but in order not to prevent flow of the brake fluid in the rear pressure-decrease passage, the latter type is preferable.
Where a damper device is disposed in the front pressure-decrease passage, a pressure pulse is prevented from occurring in the front pressure-decrease passage, or a pressure pulse that has occurred in the front pressure-decrease passage is quickly eliminated or reduced, thereby enabling to restrain the pulse transmission to the rear pressure-decrease passage. On the other hand, where the damper device is disposed in the rear pressure-decrease passage, a pressure pulse having been transmitted to the rear pressure-decrease passage can be eliminated or reduced. Thus, the damper device is desirably disposed in the rear or front pressure-decrease passage at a position as close as possible to the junction where the front and rear pressure-decrease passages merge.

Disposing the check valve in the block facilitates connection between the rear pressure-decrease passage and the check valve. Further, where a part of the block constitutes a main body of the check valve, the check valve can be provided inexpensively.
Disposing the damper device in the block facilitates connection between the rear pressure-decrease passage and the damper device. Where a part of the block constitutes a main body of the damper device, the damper device can be provided inexpensively.
When the hydraulic pressure is decreased in both of the front wheel cylinder and the rear wheel cylinder, restraining a pressure decrease in at least one of the front wheel cylinder and the rear wheel cylinder restrains transmission of the pulse in the brake fluid as discharged from the front wheel cylinder to the brake fluid as discharged from the rear wheel cylinder. Further, in the case where a pressure pulse occurs when flow of the brake fluid in the rear pressure-decrease passage meets and merges with flow of the brake fluid in the front pressure-decrease passage at the junction between the rear and front pressure-decrease passages, the occurrence of the pulse is restrained.
The restraint of operation of the front and/or rear pressure-decrease valve(s), may be implemented during the vehicle is running. However, restraining operation of the front and/or rear pressure-decrease valve(s) during the vehicle is running more or less affects the running feeling of the vehicle, namely, varies deceleration of the vehicle, inevitably. Hence, it is desirable that the restraint of operation of the front and/or rear pressure-decrease valve(s) is implemented only while the vehicle is stationary, during which the deceleration of the vehicle is zero and thus there is no influence of the restraint of operation of the front and/or rear pressure-decrease valve(s) on the running feeling, and further a noise sounds louder than while the vehicle is running since a background noise is low during the vehicle is stationary
While an operation of the rear pressure-decrease valve is prohibited, the pulse in the brake fluid as discharged from the front wheel cylinder is scarcely transmitted to the brake fluid between the rear-pressure decrease valve and the rear wheel cylinder. After the prohibition on operation of the rear pressure-decrease valve is eliminated, where the presumption that the pulse occurs when the flow of the brake fluid in the rear pressure-decrease passage and the flow of the brake fluid in the front pressure-decrease passage meet and merge is true, the occurrence of the pulse is restrained. The noise due to the pulse transmission becomes loud when the hydraulic pressure of the front wheel cylinder (hereinafter referred to as "the front wheel cylinder pressure") is high relatively to the hydraulic pressure of the rear wheel cylinder (hereinafter referred to as "the rear wheel cylinder pressure"). Thus, it is possible to effectively restrain generation of the noise by prohibiting an operation of the rear pressure-decrease valve until the front wheel cylinder pressure lowers down to or below the threshold value that is determined depending on the rear wheel cylinder pressure. It is desirable that the threshold value increases with the rear wheel cylinder pressure, and the threshold value is representatively determined as in the mode (20) below. However, it is not essential to determine the threshold value as in the mode (20), but the threshold value may be selected from a range of 85-115% of the rear wheel cylinder pressure, or may be determined to be a value larger or smaller than the rear wheel cylinder pressure by an amount selected from a range of 5-20% of a difference between the front wheel cylinder pressure and the rear wheel cylinder pressure.
When the target rate at which the front wheel cylinder pressure is to be decreased is low, an influence of the brake fluid discharged from the front wheel cylinder on the brake fluid discharged from the rear wheel cylinder is small. Hence, when the target rate is low, it is often the case that it is better not to operate the rear-pressure-decrease prohibiting portion.
The noise caused by the pulse transmission is loud when the decrease rate at which the front wheel cylinder pressure is decreased is high. Thus, provision of the front-decrease-rate limiting portion effectively restrains generation of the noise.
The noise caused by the pulse transmission is loud when the front wheel cylinder pressure is high. Hence, by limiting the decrease rate at which the front wheel cylinder pressure is decreased, until the front wheel cylinder pressure lowers down to or below the threshold value that is determined depending on the rear wheel cylinder pressure, generation of the noise is effectively restrained.
As described above, the noise due to the pulse transmission is loud when the decrease rate of the front wheel cylinder pressure is high. Thus, by operating the front-decrease-rate limiting portion only when the target rate at which the front wheel cylinder pressure is to be decreased is higher than a predetermined rate, it is prevented that the decrease rate is limited meaninglessly.
BRIEF DESCRIPTION OF THE DRAWINGS
The above and other objects, features, advantages and technical and industrial significance of the present invention will be better understood by reading the following detailed description of preferred embodiments of the invention, when considered in connection with the accompanying drawings, in which:
Fig. 1 is a schematic diagram of a fluid circuit of an electronically controlled hydraulic brake system according to a first embodiment of the present invention;
Fig. 2 is a perspective external view of a hydraulic pressure control actuator as a component of the electronically controlled hydraulic brake system;
Fig. 3 is a graph schematically illustrating a pressure pulse seen in a rear pressure-decrease passage in a conventional arrangement;
Fig. 4 is a schematic diagram of a fluid circuit of an electronically controlled hydraulic brake system according to a second embodiment of the invention;
Fig. 5 is a schematic diagram of a fluid circuit of an electronically controlled hydraulic brake system according to a third embodiment of the invention;
Fig. 6 is a flowchart illustrating a pulse restraining routine executed in an electronically controlled hydraulic brake system according to a fourth embodiment of the invention; and
Fig. 7 is a flowchart illustrating a pulse restraining routine executed in an electronically controlled hydraulic brake system according to a fifth embodiment of the invention.

### DETAILED DESCRIPTION OF PREFERRED EMBODIMENTS

Hereinafter, there will be described in detail several presently preferred embodiments of the invention defined in the appended claims, by referring to the accompanying drawings. The invention is not limited to the details of the embodiments described below, but may be embodied with various modifications occurring to those skilled in the art, including the modes described above.

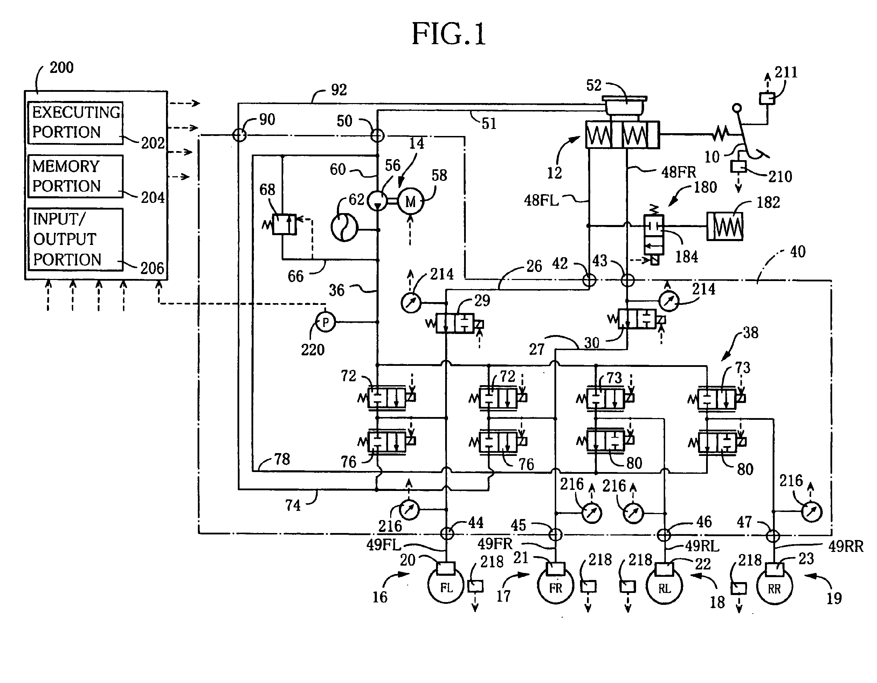

Referring first to Fig. 1, there will be described an electronically controlled hydraulic brake system according to the first embodiment. This brake system includes a brake pedal 10 as a brake operating member, a master cylinder 12, a power-operated hydraulic pressure source 14, four brakes 16-19 for respective wheels, i.e., a front left wheel, a front right wheel, a rear left wheel, and a rear right wheel. The brakes 16, 17 are for the front left and right wheels, and the brakes 18, 19 are for the rear left and right wheels. The brakes 16-19 are hydraulic brakes operated by the hydraulic pressure in respective wheel cylinders or brake cylinders 20-23.

The master cylinder 12 includes two pressurizing pistons, and a pressure chamber is defined in front of each of the pressurizing pistons. Upon operation or depression of the brake pedal 10 by an operator or a driver, a hydraulic pressure corresponding to an operating force imposed on the brake pedal 10 is produced in each of the two pressure chambers. The two pressure chambers of the master cylinder 12 are respectively connected to the wheel cylinders 20, 21 for the front wheels (hereinafter referred to as "the front wheel cylinders 20, 21) via M/C (master cylinder) passages 26, 27. In the M/C passages 26, 27, there are disposed M/C shut-off valves 29, 30, respectively. Each of the M/C shut-off valves 29, 30 is a normally-open solenoid valve.

The power-operated hydraulic pressure source 14 is connected to the four wheel cylinders 20-23 via a pressure increase passage 36. By operation of the power-operated hydraulic pressure source 14, a brake fluid in the wheel cylinders 20-23 is pressurized, that is, the hydraulic pressure in the wheel cylinders 20-23 is increased, while the wheel cylinders 20-23 are disconnected from the master cylinder 12, so as to operate the hydraulic brakes 16-19. The hydraulic pressure in each of the wheel cylinders 20-23 is controlled by a hydraulic-pressure-control valve unit 38 including a plurality of solenoid pressure-control valves including the M/C shut-off valves 29, 30.

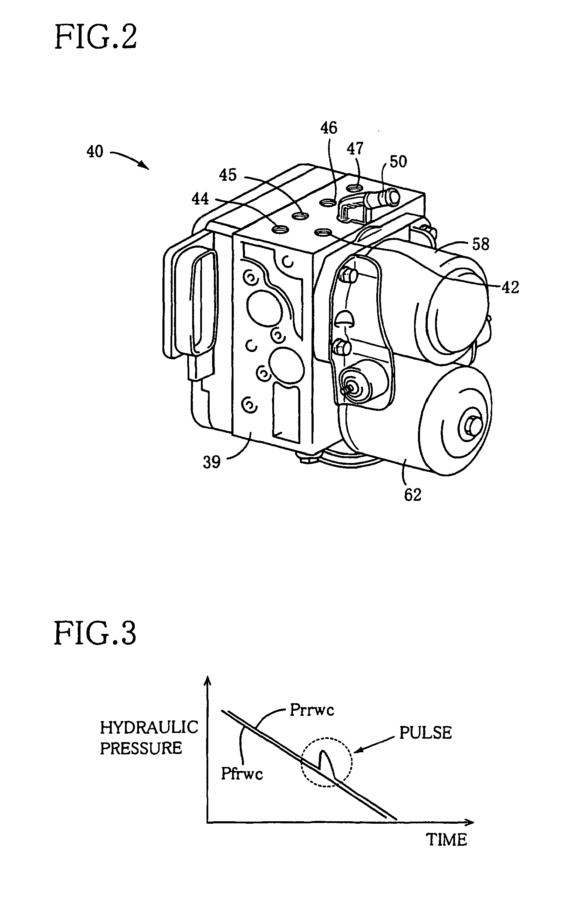

In the present embodiment, a plurality of components including the power-operated hydraulic pressure source 14 and the hydraulic-pressure-control valve unit 38 are unitized into a single integral block 39, as shown in Fig. 2. That is, a portion encircled by alternate long and short dash line in Fig. 1 corresponds to a unit 40 including the block 39 in which passages of a brake fluid are formed to connect the solenoid valves for controlling hydraulic pressure, a pump of the power-operated hydraulic pressure source, and other components, to one another. The power-operated hydraulic pressure source 14, the hydraulic-pressure-control valve unit 38 and others included in the unit 40 cooperate to control the hydraulic pressure of the wheel cylinders 20-23 so as to operate the hydraulic brakes 16-19. Hence, hereinafter the unit 40 will be referred to as a "pressure control actuator 40".

The pressure control actuator 40 has ports 42, 43, 44-47, 50, 90. Two 42, 43 of the ports are respectively connected to the two pressure chambers of the master cylinder 12, although only one 42 of the two ports 42, 43 is presented in Fig. 2. Four 44-47 of the ports are respectively connected to the wheel cylinders 20-23. A portion of each of the M/C passages 26, 27 between the port 42, 43 and the master cylinder 12 constitutes a M/C connecting passage 48FL, 48FR. A portion of the pressure increase passage 36 between each of the ports 44-47 and the respectively corresponding wheel cylinder 20-23 constitutes a wheel cylinder connecting passage 49FL, 49FR, 49RL, 49RR. The port 50 is a reservoir connecting port to which a reservoir 52 is connected via a reservoir hose 51. The reservoir 52 is a low pressure container accommodating the working or brake fluid at the atmospheric pressure.

The power-operated hydraulic pressure source 14 includes a pump device including a pump 56 and a pump motor 58 for driving the pump 56. The pump 56 is connected to the reservoir connecting port 50 via a suction passage 60, as well as to an accumulator 62. The pump 56 sucks up the working fluid in the reservoir 52 to supply the fluid to the accumulator 62 in which the fluid is accumulated in a pressurized state. A passage defined inside the reservoir hose 51 constitutes a part of the suction passage 60.
The accumulator 62 and a side (hereinafter referred to as "the sucking side") of the pump 56 from which the pump 56 sucks the fluid are connected to each other by a relief passage 66 in which a relief valve 68 is disposed. The relief valve 68 is switchable between a closed state and an open state, and is switched from the closed state to the open state when the pressure of the highly pressurized fluid of the accumulator 62 or that discharged from the pump 56 exceeds a threshold value.

The hydraulic-pressure-control valve unit 38 includes two pressure increase linear valves 72 for the front wheels, and two pressure increase linear valves 73 for the rear wheels, which valves 72, 73 are disposed in the pressure increase passage 36. The hydraulic-pressure-control valve unit 38 further includes two pressure decrease linear valves 76 for the front wheels that are disposed in a front pressure-decrease passage 74, and two pressure decrease linear valves 80 for the rear wheels that are disposed in a rear pressure-decrease passage 78. The front pressure-decrease passage 74 connects the pressure decrease linear valves 76 with the reservoir 52, and the rear pressure-decrease passage 78 connects the pressure decrease linear valves 80 with the reservoir 52. In this embodiment, the rear pressure-decrease passage 78 is connected to the suction passage 60 that connects the sucking side of the power-operated hydraulic pressure source 14 with the reservoir 52. That is, the rear pressure-decrease passage 78 is connected to the reservoir 52 via the suction passage 60, and the front pressure-decrease passage 74 is directly connected to the reservoir 52. Thus, the rear pressure-decrease passage 78 and the front pressure-decrease passage 74 are connected to the reservoir 52 independently of each other. Although not shown in Fig. 2, the block 39 has a reservoir connecting port 90 similar to the reservoir connecting port 50. The reservoir connecting port 50 is connected to the reservoir 52 by the reservoir hose 51 constituting a suction tube, and the reservoir connecting port 90 is connected to the reservoir 52 by an exhaust hose 92 mainly constituting the front pressure-decrease passage 74.

The hydraulic pressure of the front wheel cylinders 20, 21 are controlled by operation of the pressure increase linear valves 72 and the pressure decrease linear valves 76, and the hydraulic pressure in the wheel cylinders 22, 23 is controlled by the pressure increase linear valves 73 and the pressure decrease linear valves 80. By controlling the operation of the pressure increase linear valves 72, 73 and the pressure decrease linear valves 76, 80, the wheel cylinders 20-23 are controlled with respect to their hydraulic pressure individually and separately from one another. The pressure increase linear valves 72, 73 for the front and rear wheel cylinders, and the pressure decrease linear valves 76 for the front wheel cylinders, are normally-closed valves, and the pressure decrease linear valves 80 for the rear wheel cylinders are normally-open valves.

A stroke simulating device 180 is disposed in the M/C passage 26. The stroke simulating device 180 includes a stroke simulator 182 and a simulator shut-off valve 184 that is normally closed. By operating the simulator shut-off valve 184 to open/close, the stroke simulator 182 is switched between an open state to be communicated with the master cylinder 12 and a closed state to be shut off from the master cylinder 12. In this embodiment, the stroke simulator 182 is placed in the open state when the hydraulic brakes 16-19 are operated by means of the working fluid from the power-operated hydraulic pressure source 14, and in the closed state when the hydraulic brakes 16-19 are operated by means of the working fluid from the master cylinder 12.

The brake system is controlled based on an instruction from a brake ECU 200 as a hydraulic pressure controller. The brake ECU 200 is mainly constituted by a computer, and includes an executing portion 202, a memory portion 204, and an input/output portion 206. To the input/output portion 206, there are connected various sensors and others including a brake switch 210, a stroke sensor 211, a M/C pressure sensor 214, a brake pressure sensor 216, four wheel speed sensors 218 for detecting rotating speeds of respective wheels, and a pressure source sensor 220. Further, the pressure increase linear valves 72, 73, the pressure decrease linear valves 76, 80, the M/C shut-off valves 29, 30, the solenoid control valves including the simulator shut-off valve 184, the pump motor 58, and others are connected to the input/output portion 206 via respective drive circuits not shown.

Normally, when the wheels are braked, the M/C shut-off valves 29, 30 are closed to shut off the wheel cylinders 20-23 from the master cylinder 12, so that the hydraulic brakes 16-19 are operated by an operation of the power-operated hydraulic pressure source 14. At the same time, the stroke simulator 182 is communicated with the master cylinder 12 to give the operator an operating feel. A braking force desired by the operator is obtained based on an operating stroke of the brake pedal 10 detected by the stroke sensor 211, the pressure of the master cylinder as detected by the M/C pressure sensor 214, and others, and a target value of the pressure of each of the wheel cylinders 20-23 (hereinafter simply referred to as "wheel cylinder pressure") is determined such that the desired braking force can be obtained. More specifically, electric currents supplied to solenoids of the pressure increase linear valves 72, 73 and the pressure decrease linear valves 76, 80 are controlled so that an actual value of the wheel cylinder pressure coincides with the target value thereof. When the wheel cylinder pressure is to be increased, the brake fluid is supplied from the power-operated hydraulic pressure source 14 to the wheel cylinders 20-23 by an operation of the pressure increase linear valves 72, 73. When the wheel cylinder pressure is to be decreased, the brake fluid is discharged from the wheel cylinders 20-23 to the reservoir 52 by an operation of the pressure decrease linear valves 76, 80. The power-operated hydraulic pressure source 14 operates such that the pump motor 58 is controlled to operate the pump 56 in a way to hold the pressure detected by the source sensor 220 within a predetermined range.

In this embodiment, the stroke sensor 211 and the M/C pressure sensor 214 constitute an operating state detecting device. The pressure increase linear valves 72 constitute front pressure-increase valves, and the pressure increase linear valves 73 constitute rear pressure-increase valves. The pressure decrease linear valves 76 constitute front pressure-decrease valves and the pressure decrease linear valves 80 constitute rear pressure-decrease valves. Further, the arrangement that front pressure-decrease passage 74 and the rear pressure-decrease passage 78 are connected to the reservoir 52 independently of each other constitutes pulse transmission restraining means.

In this embodiment, the front pressure-decrease passage 74 and the rear pressure-decrease passage 78 are connected to the reservoir independently of each other, in order to prevent a conventionally seen pulse (shown in Fig. 3) in the hydraulic pressure Prr of the rear pressure-decrease passage due to transmission of a pressure pulse to the brake fluid in the rear pressure-decrease passage when the pressure Pfr of the front pressure-decrease passage and the pressure Prr of the rear pressure-decrease passage are decreased upon releasing of the brake pedal 10.
This embodiment may be modified such that the rear pressure-decrease passage 78 is directly connected to the reservoir 52, and the front pressure-decrease passage 74 is connected to a point in the suction passage 60.

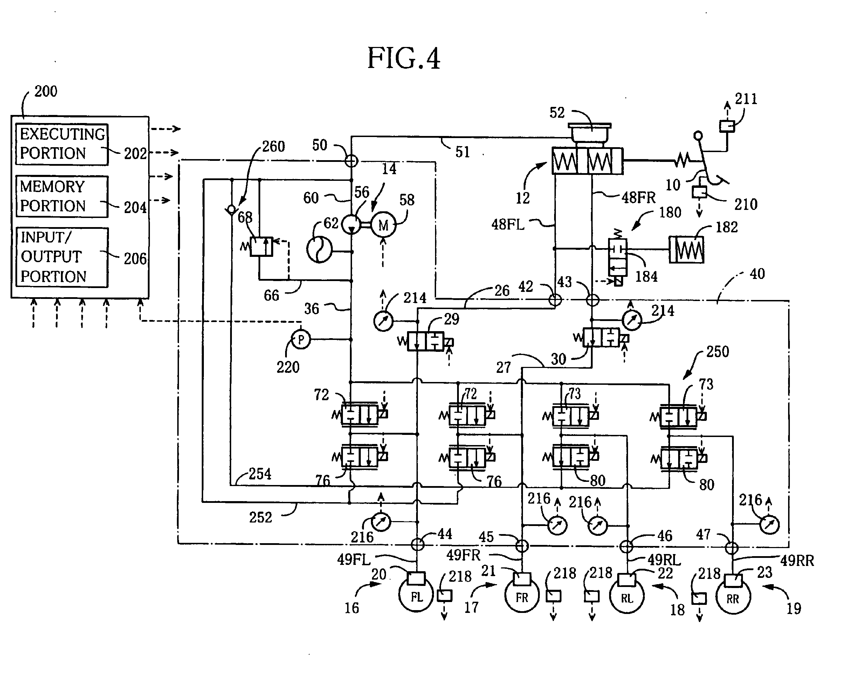

Referring now to Fig. 4, there will be described an electronically controlled hydraulic brake system according to a second embodiment of the invention. The same parts or elements as those shown in Figs. 1 and 2 will be denoted by the same reference numerals and description thereof is dispensed with.
A hydraulic-pressure-control valve unit 250 of a brake system as shown in Fig. 4 includes two pressure increase linear valves 72 for front wheels and two pressure increase linear valves 73 for rear wheels which valves 72, 73 are disposed in a pressure increase passage 36. The hydraulic-pressure-control unit 250 further includes two pressure decrease linear valves 76 for the front wheels that are disposed in a front pressure-decrease passage 252, and two pressure decrease linear valves 80 for the rear wheels that are disposed in a rear pressure-decrease passage 254. The front pressure-decrease passage 252 connects connect the pressure decrease linear valves 76 to a reservoir 52, while the rear pressure-decrease passage 254 connects the pressure decrease linear valves 80 to the reservoir 52. In the second embodiment, the front pressure-decrease passage 252 and the rear pressure-decrease passage 254 merge into a single passage that is then commonly connected to a suction passage 60 that connects a sucking side of a power-operated hydraulic pressure source 14 and the reservoir 52.

A check valve 260 is disposed in the rear pressure-decrease passage 254 at a position on the side of the pressure decrease linear valves 80 with respect to a junction at which the front and rear pressure-decrease passages 252, 254 meet and merge. Thus, the check valve 260 is disposed in a block 39. The check valve 260 permits flow of a brake fluid in a direction from the pressure decrease linear valves 80 to the reservoir 52, but inhibits flow of the brake fluid in the opposite direction, i.e., from the reservoir 52 to the pressure decrease linear valves 80. Thus, transmission of a pressure pulse of the brake fluid from the junction between the front and rear pressure-decrease passages 252, 254 to the rear pressure-decrease passage 254 is prevented. The check valve 260 is disposed in the rear pressure-decrease passage 254 and at a position as close as possible to the junction, so that a pressure pulse is not transmitted to the most part of the rear pressure-decrease passage 254. Thus, inhibition of discharge of the brake fluid from the pressure decrease linear valves 80 is minimized. The check valve 260 constitutes a pulse transmission restrainer.

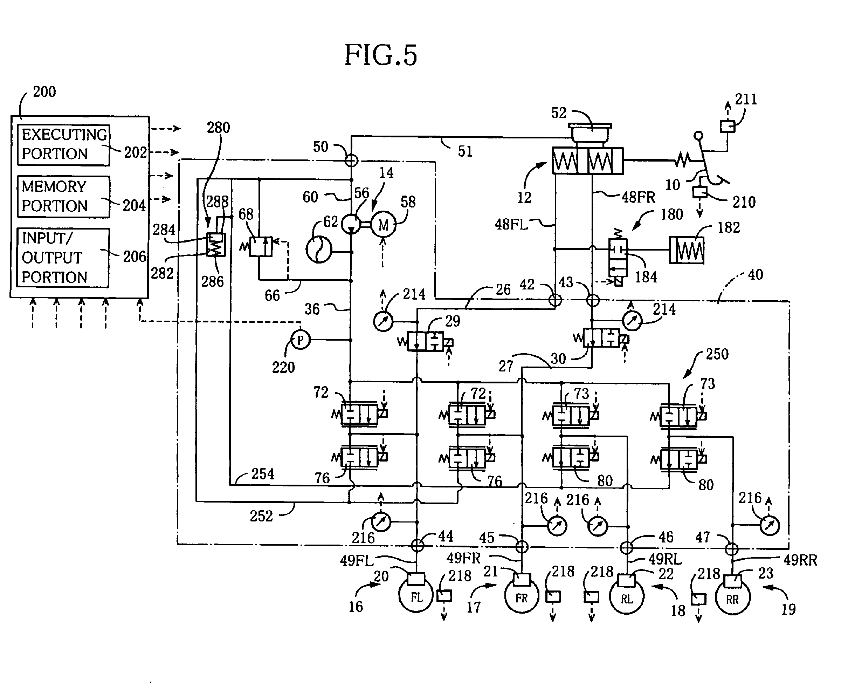

Referring to Fig. 5, there will be described an electronically controlled hydraulic brake system according to a third embodiment of the invention. The same parts or elements as those shown in Figs. 1-4 will be denoted by the same reference numerals and description thereof is dispensed with.
In the third embodiment, the pulse transmission restrainer is constituted by a damper device 280. In this specific example, the damper device 280 is disposed in a rear pressure-decrease passage 254 at a position on the side of pressure decrease linear valves 80 with respect to a junction at which the front pressure-decrease passage 252 and the rear pressure-decrease passage 254 meet to merge, and as close as possible to the front pressure-decrease passage 252. As shown in Fig. 5, the damper device 280 includes a cylinder bore 282 formed in a block 39, a piston 284 that is liquid-tightly and slidably fitted in the cylinder bore 282, a liquid chamber 288, and an elastic member 286 biasing the piston 284 in a direction to reduce an inner volume of the liquid chamber 288.
The damper device is not limited to the above-described one, but damper devices of other types may be employed. For instance, the damper device may be of a type constituted by a rubber sack in which is defined a liquid chamber and which elastically expands to increase an inner volume of the liquid chamber. The damper device may be of another type having a liquid chamber which is communicated with the rear pressure-decrease passage 254, and in which a rubber sack filled with a compressed gas is disposed, so that the rubber sack elastically contracts to increase an inner volume of the liquid chamber.
In either case, the damper device 280 can attenuate a pressure pulse transmitted from the junction between the front pressure-decrease passage 252 and the rear pressure-decrease passage 254 to the rear pressure-decrease passage 254.
The damper device 280 may not be disposed in the rear pressure-decrease passage 254, but in the front pressure-decrease passage 252.

In each of the embodiments, it is not essential to unitize the power-operated hydraulic pressure source 14, the hydraulic-pressure-control valve unit 38, and others, into a single integral block. For instance, the invention is applicable also to a brake system where at least one of the power-operated hydraulic pressure source 14 and the hydraulic-pressure-control valve unit 38 is not disposed in the block, or where the power-operated hydraulic pressure source 14 and the hydraulic-pressure-control valve unit 38 are disposed in respective blocks.

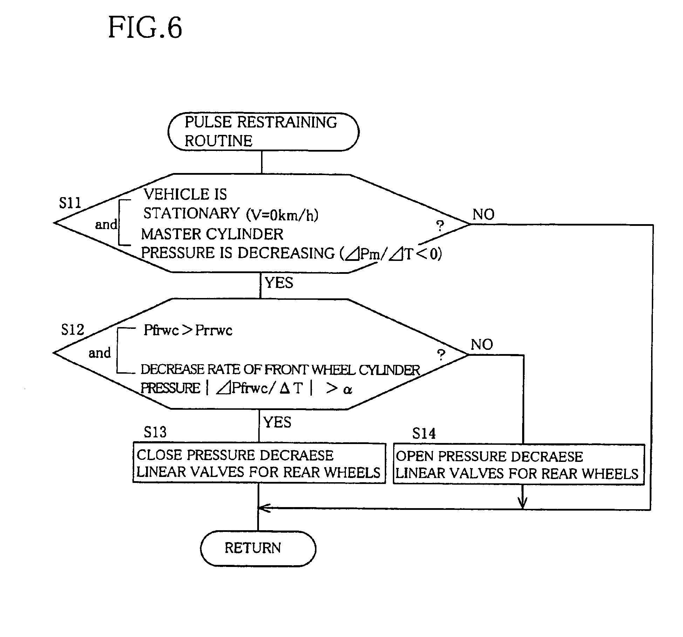

Each of the above-described embodiments restrains generation of noise by properly constructing the hardware. However, the noise generation can be restrained by properly configuring the software, namely, by improving the operation of the pressure decrease linear valves 76, 80 to decrease the wheel cylinder pressure. There will be described electronically controlled hydraulic brake systems according to a fourth and a fifth embodiment of the invention where the noise generation is restrained by properly configuring the software in respective manners.
Referring to Fig. 6, there will be described the brake system according to the fourth embodiment. The same parts or elements as those shown in Figs. 1-5 will be denoted by the same reference numerals and description thereof is dispensed with.
Fig. 6 illustrates a pulse restraining routine constituting a part of a hydraulic pressure control program implemented in the brake system, according to which program a braking force desired by an operator or driver is obtained based on at least one of an operating stroke detected by a stroke sensor 211 and the pressure of a master cylinder detected by a M/C pressure sensor 214 so that the pressure of wheel cylinders 20-23 is controlled so as to obtain the desired braking force. That is, this pulse restraining routine of Fig. 6 corresponds to a part of the hydraulic pressure control program which part is implemented to restrain a pressure pulse of the brake fluid from being transmitted from a junction between a front pressure-decrease passage 74 and a rear pressure-decrease passage 78, to the rear pressure-decrease passage 78. The hydraulic pressure control program is stored in a memory portion 204 in a brake ECU 200, and implemented by an executing portion 202.

A control flow according to the pulse restraining routine as a part of the hydraulic pressure control program begins with step S11 in which are determined whether an automotive vehicle in which the hydraulic brake system is installed is stationary or running, and whether the master cylinder pressure Pm detected by a M/C pressure sensor 214 is decreasing or not. The former determination is made based on a vehicle speed V, more specifically, whether the vehicle speed V is zero or not. The vehicle speed V is obtained from rotation speeds of four wheels, i.e., a front left, a front right, a rear left, and a rear right wheel, as detected by respective wheel speed sensors 218. When a negative decision (NO) is made in both of the two determinations in step S11, steps S12-14 are skipped and the control flow returns to a main routine not shown. When an affirmative decision is made in both of the determinations, the control flow goes to step S12 to determine (i) whether the pressure Pfwc of wheel cylinders 20, 21 for the front wheels, more specifically, an average of pressure values of the wheel cylinders 20, 21 for front wheels respectively detected by brake pressure sensors 216 (which average will be hereinafter referred to as "front wheel cylinder pressure Pfwc"), is larger than the pressure Prwc of wheel cylinders 22, 23 for the rear wheels, more specifically, an average of pressure values of the wheel cylinders 22, 23 for the rear wheels respectively detected by brake pressure sensors 216 (which average will be hereinafter referred to as "rear wheel cylinder pressure Prwc"), and (ii) whether a decrease rate |Δ Pfwc / ΔT| of the front wheel cylinder pressure Pfwc is larger than a predetermined decrease rate α. When the decisions made for the determinations (i), (ii) are both affirmative (YES), the control flow goes to step S13 to close, or nearly close, the pressure decrease linear valves 80 for the rear wheels. When the pressure decrease linear valves 80 are nearly closed, an opening of the pressure decrease linear valves 80 is made not larger than 30% or 20%. That is, the opening of the pressure decrease linear valves 80 is made 20% by applying 80% of a minimum electric current necessary to completely close the pressure decrease linear valves 80, for instance. Thus, while the decrease rate of the front wheel cylinder pressure Pfwc is larger than the predetermined decrease rate α, and the front wheel cylinder pressure Pfwc is larger than the rear wheel cylinder pressure Prwc, it is prohibited, or at least considerably restrained, to decrease the rear wheel cylinder pressure Prwc.

On the other hand, when a negative decision (NO) is made in at least one of the determinations (i), (ii), the flow goes to step S14 to open the pressure decrease linear valves 80 for the rear wheels, so as to permit to decrease the rear wheel cylinder pressure Prwc. This is because that a possibility that a pressure pulse in the brake fluid is transmitted from the junction between the front and rear pressure-decrease passages 74, 78 to the rear pressure-decrease passage 78 is low, when the front wheel cylinder pressure Pfwc lowers below the rear wheel cylinder pressure Prwc, or when the decrease rate |Δ Pfwc / ΔT| of the front wheel cylinder pressure Pfwc is lower than the predetermined decrease rate α.
In the present fourth embodiment, transmission of a pressure pulse from the junction between the front and rear pressure-decrease passages 74, 78 to the rear pressure-decrease passage 78 is well prevented, thereby restraining generation of noise.

In this fourth embodiment, a portion of the brake ECU 200 for executing the steps S11-13 constitutes a rear-pressure-decrease prohibiting portion which prohibits an operation of the pressure decrease linear valves 80 for the rear wheels until the front wheel cylinder pressure Pfwc lowers down to or below a threshold value that is determined depending on the rear wheel cylinder pressure Prwc, which threshold value is the rear wheel cylinder pressure Prwc in the present embodiment. The rear-pressure-decrease prohibiting portion, that executes, among other steps, step S11 in which is made a determination whether the automotive vehicle is stationary or running, is adapted to operate during the vehicle is stationary. Further, by the determination in step S12 related to the decrease rate of the front wheel cylinder pressure Pfwc, the rear pressure decrease inhibiting portion operates only when the target decrease rate of the front wheel cylinder pressure Pfwc is not smaller than the predetermined decrease rate.

The fourth embodiment may be modified as follows. Once an affirmative decision is made in step S 12 in a cycle of the pulse restraining routine of the flowchart in Fig. 6, step S13 is kept implemented in each of the following cycles of the pulse restraining routine for a predetermined time period. For instance, the keeping implementing step S13 is realized such that step S13 is kept implemented for a predetermined number of cycles of the pulse restraining routine. When the predetermined time period has elapsed, the keeping implementing step S13 is terminated and the pressure decrease linear valves 80 for the rear wheels are opened.

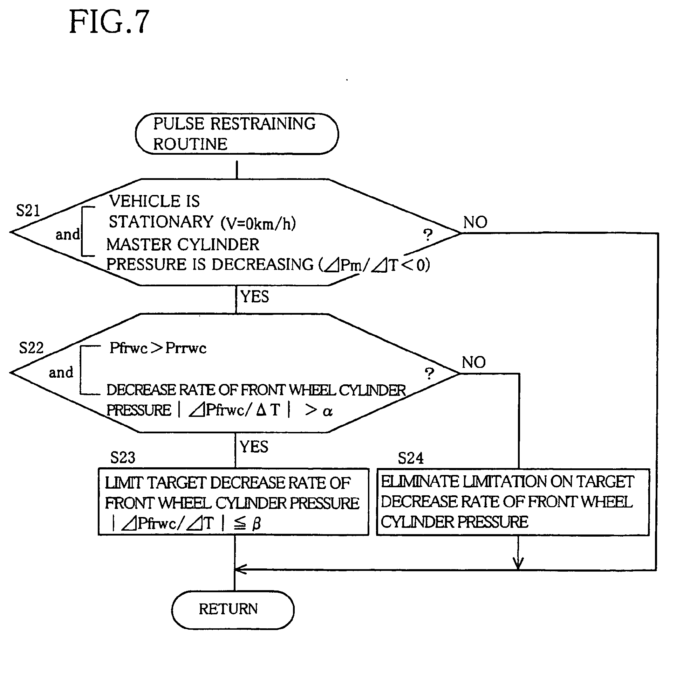

Referring now to Fig. 7, there will be described an electronically controlled hydraulic brake system according to the fifth embodiment of the invention, as another example in which the generation of noise is restrained by means of software. The same parts or elements as those shown in Figs. 1-5 will be denoted by the same reference numerals and description thereof is dispensed with.
Like the pulse restraining routine illustrated in Fig. 6, a pulse restraining routine of Fig. 7 is also the part of the hydraulic pressure control program stored in the memory portion 204 and executed by the executing portion 202, which part is implemented to restrain a pressure pulse of the brake fluid from being transmitted from the junction between the front pressure-decrease passage 74 and the rear pressure-decrease passage 78, to the rear pressure-decrease passage 78.
The routine begins at steps S21 and S22 to make the same determinations as those in steps S11 and S12 according to the fourth embodiment.
When an affirmative decision (YES) is made in both steps S21, S22, the flow goes to step S23 to limit a target decrease rate at which the pressure in front wheel cylinders 20, 21, that is, the front wheel cylinder pressure Pfwc, is decreased. More specifically, when a provisional target decrease rate of the front wheel cylinder pressure Pfwc corresponding to a change in a braking force desired by an operator, which braking force is obtained based on at least one of an operating stroke as detected by a stroke sensor 211 and the pressure of a master cylinder as detected by a M/C pressure sensor 214, is larger than a threshold rate β, a final target decrease rate is determined to be the threshold rate β. On the other hand, when the provisional target decrease rate of the front wheel cylinder pressure Pfwc is smaller than the threshold rate β, the provisional target decrease rate is set as the final target decrease rate.
When a negative decision (NO) is made in step S22, the flow goes to step S24 to eliminate the limitation on the decrease rate. That is, where the provisional target decrease rate is smaller than the threshold rate β, or the front wheel cylinder pressure Pfwc is smaller than the rear wheel cylinder pressure Prwc, a possibility that a pressure pulse of the brake fluid is transmitted from the junction between the front and rear pressure-decrease passages 74, 78 to the rear pressure-decrease passage 78 is low, and thus a normal control to decrease the front wheel cylinder pressure Pfwc is executed.
According to the present fifth embodiment, too, transmission of a pressure pulse from the junction between the front and rear pressure-decrease passages 74, 78 to the rear pressure-decrease passage 78 is well prevented, thereby restraining generation of noise.

In the fifth embodiment, a portion of the brake ECU 200 which executes steps S21-23 constitutes an upper limit setting portion that sets an upper limit to the decrease rate of the front wheel cylinder pressure Pfwc. By implementing step S22, the upper limit setting portion limits the rate at which the front wheel cylinder pressure Pfwc is decreased by an operation of the front pressure-decrease valves, until the front wheel cylinder pressure Pfwc lowers down to or below the threshold value that is determined depending on the rear wheel cylinder pressure Prwc, which threshold value is the rear wheel cylinder pressure Prwc in the present embodiment.
Implementing step S21, the upper limit setting portion operates only during an automotive vehicle in which the brake system is installed is stationary Further, making a determination related to the decrease rate of the front wheel cylinder pressure Pfwc in step S22, the upper limit setting portion operates only when the target decrease rate of the front wheel cylinder pressure Pfwc is not smaller than the predetermined decrease rate. The upper limit setting portion is an example of a front-decrease-rate limiting portion that limits the rate at which the front wheel cylinder pressure Pfwc is decreased by an operation of the front pressure-decrease valves.
The rear-pressure-decrease prohibiting portion and the front-decrease-rate limiting portion are examples of a pressure-decrease restraining portion.

## Claims

1. An electronically controlled hydraulic brake system comprising:
a brake operating member (10);
a reservoir (52) containing a brake fluid;
a front wheel cylinder (20, 21) and a rear wheel cylinder (22, 23);
a front pressure-increase valve (72, 72) and a rear pressure-increase valve (73, 73);
a front pressure-decrease valve (76, 76) and a rear pressure-decrease valve (80, 80);
a power-operated hydraulic pressure source (14);
a front pressure-decrease passage (74, 252) which connects the front pressure-decrease valve (76, 76) with the reservoir (52) and a rear pressure-decrease passage (75; 254) which connects the rear pressure-decrease valve (80, 80) with the reservoir (52);
and an operating state detecting device (211, 214) which detects an operation state of the brake operating member (10) based on which the brake fluid is
(i) supplied to the front wheel cylinder (20, 21) and the rear wheel cylinder (22, 23) from the power-operated hydraulic pressure source (14) by operation of the front pressure-increase valve (72, 72) and the rear pressure-increase valve (72, 73), respectively, o as to increase pressure in the front wheel cylinder (20, 21) and the rear wheel cylinder (22, 23) and
(ii) discharged from the front wheel cylinder (20, 21) and the rear wheel cylinder (22, 23) to the reservoir (52) via the front pressure-decrease passage (74; 252) and the rear pressure-decrease passage (78, 254), respectively, by operation of the front pressure-decrease valve (76, 76) and the rear pressure-decrease valve (80, 80) so as to decrease the pressure in the front wheel cylinder (20, 21) and the rear wheel cylinder (22, 23)
**characterised in that**
the front pressure-decrease passage and the rear pressure-decrease passage are connected to the reservoir independently of each other, and a pulse transmission restraining means is constituted by the arrangement that the front pressure-decrease passage and the rear pressure-decrease passage are connected to the reservoir independently of each other.

2. The system according claim 1, wherein one of the front pressure-decrease passage and the rear pressure-decrease passage is connected to a suction passage (60) which connects a suction side of the power-operated hydraulic pressure source with the reservoir so that the one of the front pressure-decrease passage and the rear pressure-decrease passage is connected to the reservoir via the suction passage, and the other of the front pressure-decrease passage and the rear pressure-decrease passage is directly connected to the reservoir.

3. An electronically controlled hydraulic brake system comprising:
a brake operating member (10);
a reservoir (52) containing a brake fluid;
a front wheel cylinder (20, 21) and a rear wheel cylinder (22, 23);
a front pressure-increase valve (72, 72) and a rear pressure-increase valve (73, 73);
a front pressure-decrease valve (76, 76) and a rear pressure-decrease valve (80, 80);
a power-operated hydraulic pressure source (14);
a front pressure-decrease passage (74, 252) which connects the front pressure-decrease valve (76, 76) with the reservoir (52) and a rear pressure-decrease passage (75; 254) which connects the rear pressure-decrease valve (80, 80) with the reservoir (52);
and an operating state detecting device (211, 214) which detects an operation state of the brake operating member (10) based on which the brake fluid is
(i) supplied to the front wheel cylinder (20, 21) and the rear wheel cylinder (22, 23) from the power-operated hydraulic pressure source (14) by operation of the front pressure-increase valve (72, 72) and the rear pressure-increase valve (72, 73), respectively, o as to increase pressure in the front wheel cylinder (20, 21) and the rear wheel cylinder (22, 23) and
(ii) discharged from the front wheel cylinder (20, 21) and the rear wheel cylinder (22, 23) to the reservoir (52) via the front pressure-decrease passage (74; 252) and the rear pressure-decrease passage (78, 254), respectively, by operation of the front pressure-decrease valve (76, 76) and the rear pressure-decrease valve (80, 80) so as to decrease the pressure in the front wheel cylinder (20, 21) and the rear wheel cylinder (22, 23)
**characterised in that**
the front pressure decrease passage and the rear pressure-decrease passage merge at a junction and then extend in the form of a common passage which is connected to the reservoir, the system further comprising a pulse transmission restrainer (260; 280) which is disposed in at least one of a portion of the front pressure-decrease passage and a portion of the rear pressure-decrease passage which portions are respectively on the side of the front pressure decrease valve and the rear pressure-decrease valve with respect to the junction, so that the pressure pulse is restrained from being transmitted to the rear pressure-decrease passage.

4. The system according to claim 3, wherein the pulse transmission restrainer includes a check valve (260) which is disposed in the rear pressure-decrease passage and permits flow of the brake fluid in a first direction from the rear pressure-decrease valve toward the reservoir but inhibits flow of the brake fluid in a second direction opposite to the first direction.

5. The system according to claim 3 or 4, wherein the pulse transmission restrainer includes a damper device (280) which is disposed in at least one of a portion of the front pressure-decrease passage and a portion of the rear pressure-decrease passage which portions are respectively on the side of the front pressure-decrease valve and the rear pressure-decrease valve with respect to the junction, so as to absorb the pulse in the at least one portion.

6. The system according to any one of claims 1 to 5, wherein at least the front pressure-decrease valve and the rear pressure-decrease valve are attached to an integral block (39), and an end portion of the front pressure-decrease passage on the side of the front pressure-decrease valve and an end portion of the rear pressure-decrease passage on the side of the rear pressure-decrease valve are formed in the block.

7. The system according to claim 6,
wherein the front pressure-decrease passage and the rear pressure-decrease passage are connected to the reservoir independently of each other,
wherein the block is connected with the reservoir via an exhaust tube (92) and a suction tube (51) constituting a part of the suction passage,
and wherein one of the front pressure-decrease passage and the rear pressure-decrease passage is formed in the block and connected to a portion of the suction passage other than the suction tube, and the other of the front pressure-decrease passage and the rear pressure-decrease passage is mainly constituted by the exhaust tube.

8. The system according to claim 4, wherein at least the front pressure-decrease valve and the rear pressure-decrease valve are attached to an integral block (39), an end portion of the front pressure-decrease passage on the side of the front pressure-decrease valve and an end portion of the rear pressure-decrease passage on the side of the rear pressure-decrease valve are formed in the block, and the check valve is disposed in a portion of the rear pressure-decrease passage which portion is formed in the block.

9. The system according to claim 5, wherein at least the front pressure-decrease valve and the rear pressure-decrease valve are attached to an integral block (39), an end portion of the front pressure-decrease passage on the side of the front pressure-decrease valve and an end portion of the rear pressure-decrease passage on the side of the rear pressure-decrease valve are formed in the block, and the damper device is connected to at least one of the end portion of the front pressure-decrease passage and the end portion of the rear pressure-decrease passage.

10. The system according to any one of claims 1 to 9, wherein the pulse transmission restraining means includes a pressure-decrease restraining portion (S11-13, S21-23) which restrains an operation of at least one of the front pressure-decrease valve and the rear pressure-decrease valve when the hydraulic pressure is decreased in both of the front wheel cylinder and the rear wheel cylinder.

11. The system according to claim 10, which is installed in an automotive vehicle, and wherein the pressure-decrease restraining portion operates while the automotive vehicle is stationary.

12. The system according to claim 10 or 11, wherein the pressure-decrease restraining portion includes a rear-pressure-decease prohibiting portion (S11-13) which prohibits an operation of the rear pressure-decrease valve until the hydraulic pressure (Pfwc) of the front wheel cylinder lowers down to or below a threshold value which is determined depending on the hydraulic pressure (Prwc) of the rear wheel cylinder.

13. The system according to claim 12, wherein the rear-pressure-decrease prohibiting portion operates when a target rate, at which the front wheel cylinder pressure (Pfwc) is to be decreased, and which is determined based on the operating state of the brake operating member, is not smaller than a predetermined rate (α), and does not operate when the target rate is smaller than the predetermined rate.

14. The system according to claim 10 or 11, wherein the pressure-decrease restraining portion includes a front-decrease-rate limiting portion (S21-S23) which limits a decrease rate at which the front wheel cylinder pressure is decreased by an operation of the front pressure-decrease valve.

15. The system according to claim 14, wherein the front-decrease-rate limiting portion operates to limit the decrease rate until the front wheel cylinder pressure lowers down to or below a threshold value which is determined depending on the rear wheel cylinder pressure.

16. The system according to claim 14 or 15, wherein the front-decrease-rate limiting portion operates when a target rate at which the front wheel cylinder pressure is to be decreased is higher than a predetermined rate (α).

17. The system according to any one of claims 14-16, wherein the front-decrease-rate limiting portion includes an upper limit setting portion (S21-S23) which sets an upper limit (β) to the decrease rate.

18. The system according to claim 12, 13 or 15, wherein the threshold value is the rear wheel cylinder pressure.

## Patentansprüche

1. Elektronisch gesteuertes Hydraulikbremssystem mit:
einem Bremsbedienteil (10);
einem Reservoir (52), das eine Bremsflüssigkeit enthält;
einem Vorderradzylinder (20, 21) und einem Hinterradzylinder (22, 23);
einem Erhöhungsventil (72, 72) für den vorderen Druck und einem Erhöhungsventil (73, 73) für den hinteren Druck,
einem Verringerungsventil (76, 76) für den vorderen Druck und einem Verringerungsventil (80, 80) für den hinteren Druck;
einer energiebetriebenen Hydraulikdruckquelle (14);
einem vorderen Druckverringerungsdurchlass (74, 252), der das Verringerungsventil (76, 76) für den vorderen Druck mit dem Reservoir (52) verbindet, und einem hinteren Druckverringerungsdurchlass (75; 254), der das Verringerungsventil (80, 80) für den hinteren Druck mit dem Reservoir (52) verbindet;
und einer Vorrichtung (211, 214) zur Erfassung des Betriebszustands, die einen Betriebszustand des Bremsbedienteils (10) erfasst, wobei auf der Grundlage dieser Erfassung das Bremsfluid
(i) dem Vorderradzylinder (20, 21) und dem Hinterradzylinder (22, 23) von der energiebetriebenen Hydraulikquelle (14) durch Betrieb des Erhöhungsventils (72, 72) für den vorderen Druck und des Erhöhungsventils (73, 73) für den hinteren Druck jeweils so zugeführt wird, dass der Druck in dem Vorderradzylinder (20, 21) und dem Hinterradzylinder (22, 23) erhöht wird, und
(ii) aus dem Vorderradzylinder (20, 21) und dem Hinterradzylinder (22, 23) über den vorderen Druckverringerungsdurchlass (74; 252) und den hinteren Druckverringerungsdurchlass (78, 254) jeweils an das Reservoir (52) abgegeben wird, indem das Verringerungsventil (76, 76) für den vorderen Druck und das Verringerungsventil (80, 80) für den hinteren Druck so betrieben werden, dass der Druck in dem Vorderradzylinder (20, 21) und dem Hinterradzylinder (22, 23) sinkt,
**dadurch gekennzeichnet, dass**
der vordere Druckverringerungsdurchlass und der hintere Druckverringerungsdurchlass unabhängig voneinander mit dem Reservoir verbunden sind, und eine Stoßübertragungsbeschränkung durch die Anordnung gebildet wird, dass der vordere Druckverringerungsdurchlass und der hintere Druckverringerungsdurchlass unabhängig voneinander mit dem Reservoir verbunden sind.

2. System nach Anspruch 1, wobei entweder der vordere Druckverringerungsdurchlass oder der hintere Druckverringerungsdurchlass mit einem Saugdurchlass (60) verbunden ist, der eine Saugseite der leistungsbetriebenen Hydraulikdruckquelle mit dem Reservoir so verbindet, dass entweder der vordere Druckverringerungsdurchlass oder der hintere Druckverringerungsdurchlass über den Saugdurchlass mit dem Reservoir verbunden ist, und der andere aus dem vorderen Druckverringerungsdurchlass und dem hinteren Druckverringerungsdurchlass direkt mit dem Reservoir verbunden ist.

3. Elektronisch gesteuertes hydraulisches Bremssystem mit:
einem Bremsbedienteil (10);
einem Reservoir (52), das ein Bremsfluid enthält;
einem Vorderradzylinder (20, 21) und einem Hinterradzylinder (22, 23);
einem Erhöhungsventil (72, 72) für den vorderen Druck und einem Erhöhungsventil (73, 73) für den hinteren Druck;
einem Verringerungsventil (76, 76) für den vorderen Druck und einem Verringerungsventil (80, 80) für den hinteren Druck;
einer energiebetriebenen Hydraulikdruckquelle (14);
einem vorderen Druckverringerungsdurchlass (74, 252), der das Verringerungsventil (76, 76) für den vorderen Druck mit dem Reservoir (52) verbindet und einem hinteren Druckverringerungsdurchlass (75; 254), der das Verringerungsventil (80, 80) für den hinteren Druck mit dem Reservoir (52) verbindet;
und einer Vorrichtung (211, 214) zur Erfassung eines Betriebszustands, die einem Betriebszustand des Bremsbedienteils (10) erfasst, aufgrund dessen das Bremsfluid
(i) dem Vorderradzylinder (20, 21) und dem Hinterradzylinder (22, 23) von der energiebetriebenen Hydraulikdruckquelle (14) zugeführt wird, indem das Erhöhungsventil (72, 72) für den vorderen Druck und das Erhöhungsventil (73, 73) für den hinteren Druck jeweils so betätigt werden, dass der Druck in dem Vorderradzylinder (20, 21) und dem Hinterradzylinder (22, 23) erhöht wird, und
(ii) aus dem Vorderradzylinder (20, 21) und dem Hinterradzylinder (22, 23) jeweils über den vorderen Druckverringerungsdurchlass (74; 252) und den hinteren Druckverringerungsdurchlass (78; 254) abgegeben wird, indem das Verringerungsventil (76, 76) für den vorderen Druck und das Verringerungsventil (80, 80) für den hinteren Druck so betrieben werden, dass der Druck in dem Vorderradzylinder (20, 21) und dem Hinterradzylinder (22, 23) sinkt,
**dadurch gekennzeichnet, dass**
der vordere Druckverringerungsdurchlass und der hintere Druckverringerungsdurchlass an einem Verbindungspunkt zusammenkommen und sich dann in der Form eines gemeinsamen Durchlasses erstrecken, der mit dem Reservoir verbunden ist, wobei das System weiterhin eine Stoßübertragungsbeschränkung (260; 280) aufweist, die mindestens entweder in einem Abschnitt des vorderen Druckverringerungsdurchlasses oder einem Abschnitt des hinteren Druckverringerungsdurchlasses angeordnet ist, wobei diese Abschnitte mit Bezug auf den Verbindungspunkt jeweils auf der Seite des Verringerungsventils für den vorderen Druck oder des Verringerungsventils für den hinteren Druck liegen, so dass der Druckpuls daran gehindert wird, an den hinteren Druckverringerungsdurchlass übertragen zu werden.

4. System nach Anspruch 3, wobei die Stoßübertragungsbeschränkung ein Rückschlagventil (260) umfasst, das in dem hinteren Druckverringerungsdurchlass angeordnet ist und den Fluss des Bremsfluids in einer ersten Richtung von dem hinteren Druckverringerungsventil hin zum Reservoir erlaubt, aber den Fluss des Bremsfluids in einer zweiten Richtung entgegen der ersten Richtung verhindert.

5. System nach Anspruch 3 oder 4, wobei die Stoßübertragungsbeschränkung eine Dämpfervorrichtung (280) umfasst, die mindestens entweder in einem Abschnitt des vorderen Druckverringerungsdurchlasses oder einem Abschnitt des hinteren Druckverringerungsdurchlasses angeordnet ist, wobei diese Abschnitte mit Bezug auf den Verbindungspunkt jeweils auf der Seite des vorderen Druckverringerungsventils oder des hinteren Druckverringerungsventils angeordnet sind, um so den Puls in dem mindestens einen Abschnitt zu absorbieren.

6. System nach einem der Ansprüche 1 bis 5, wobei mindestens das vordere Druckverringerungsventil oder das hintere Druckverringerungsventil an einem integralen Block (39) angebracht sind, und ein Endabschnitt des vorderen Druckverringerungsdurchlasses auf der Seite des vorderen Druckverringerungsventils und ein Endabschnitt des hinteren Druckverringerungsdurchlasses auf der Seite des hinteren Druckverringerungsventils in dem Block gebildet sind.

7. System nach Anspruch 6,
wobei der vordere Druckverringerungsdurchlass und der hintere Druckverringerungsdurchlass unabhängig voneinander mit dem Reservoir verbunden sind,
wobei der Block mit dem Reservoir über ein Ablassrohr (92) und ein Saugrohr (51) verbunden ist, das einen Teil des Saugdurchlasses bildet,
und wobei entweder der vordere Druckverringerungsdurchlass oder der hintere Druckverringerungsdurchlass in dem Block gebildet ist und mit einem Abschnitt des Saugdurchlasses außer dem Saugrohr verbunden ist, und der andere aus dem vorderen Druckverringerungsdurchlass und dem hinteren Druckverringerungsdurchlass hauptsächlich durch das Ablassrohr gebildet wird.

8. System nach Anspruch 4, wobei mindestens das vordere Druckverringerungsventil oder das hintere Druckverringerungsventil an einem integralen Block (39) angebracht sind, ein Endabschnitt des Druckverringerungsdurchlasses auf der Seite des vorderen Druckverringerungsventils und ein Endabschnitt des hinteren Druckverringerungsdurchlasses auf der Seite des hinteren Druckverringerungsventils in dem Block gebildet sind, und das Rückschlagventil in einem Abschnitt des hinteren Druckverringerungsdurchlasses angeordnet ist, der in dem Block gebildet ist.

9. System nach Anspruch 5, wobei mindestens das vordere Druckverringerungsventil oder das hintere Druckverringerungsventil an einem integralen Block (39) angebracht sind, ein Endabschnitt des vorderen Druckverringerungsdurchlasses auf der Seite des vorderen Druckverringerungsventils und ein Endabschnitt des hinteren Druckverringerungsdurchlasses auf der Seite des hinteren Druckverringerungsventils in dem Block gebildet sind, und die Dämpfervorrichtung mit mindest entweder dem Endabschnitt des vorderen Druckverringerungsdurchlasses oder dem Endabschnitt des hinteren Druckverringerungsdurchlasses verbunden ist.

10. System nach einem der Ansprüche 1 bis 9, wobei die Stoßübertragungsbeschränkung einen Abschnitt (S11-13, S21-23) zum Beschränken der Druckverringerung aufweist, der einen Betrieb mindest entweder des vorderen Druckverringerungsventils oder des hinteren Druckverringerungsventils beschränkt, wenn der Hydraulikdruck sowohl in dem Vorderradzylinder als auch dem Hinterradzylinder verringert wird.

11. System nach Anspruch 10, das in einem Automobil eingebaut ist, und wobei der Abschnitt zum Beschränken der Druckverringerung arbeitet, während das Automobil steht.

12. System nach Anspruch 10 oder 11, wobei der Abschnitt zum Beschränken der Druckverringerung einen Abschnitt (S11-13) zum Verhindern eines Druckabfalls auf der hinteren Seite aufweist, der einen Betrieb des hinteren Druckverringerungsventils verhindert, bis der Hydraulikdruck (Pfwc) des Vorderradzylinders auf oder unter einen Schwellenwert gefallen ist, der abhängig vom Hydraulikdruck (Prwc) des Hinterradzylinders bestimmt wird.

13. System nach Anspruch 12, wobei der Abschnitt zum Verhindern des Druckabfalls auf der hinteren Seite eingreift, wenn eine Zielrate, mit welcher der Vorderradzylinderdruck (Pfwc) zu verringern ist, und die auf der Grundlage des Betriebszustands des Bremsbedienteils bestimmt wird, nicht kleiner als eine vorab festgelegte Rate (α) ist, und nicht eingreift, wenn die Zielrate kleiner als die vorab festgelegte Rate ist.

14. System nach Anspruch 10 oder 11, wobei der Abschnitt zum Beschränken der Druckverringerung einen Abschnitt (S21-S23) zum Beschränken der vorderen Verringerungsrate umfasst, der eine Verringerungsrate begrenzt, mit welcher der Vorderradzylinderdruck durch einen Betrieb des vorderen Druckverringerungsventils verhindert wird.

15. System nach Anspruch 14, wobei der Abschnitt zum Beschränken der vorderen Verringerungsrate arbeitet, um die Verringerungsrate zu beschränken, bis der Vorderradzylinderdruck auf oder unter einen Schwellenwert sinkt, der abhängig von dem Hinterradzylinderdruck bestimmt wird.

16. System nach Anspruch 14 oder 15, wobei der Abschnitt zum Beschränken der vorderen Verringerungsrate arbeitet, wenn eine Zielrate, mit welcher der vordere Radzylinderdruck zu verringern ist, höher als eine vorab festgelegte Rate (α) ist.

17. System nach einem der Ansprüche 14 bis 16, wobei der Abschnitt zum Beschränken der vorderen Verringerungsrate einen Abschnitt (S21-S23) zum Festlegen eines oberen Grenzwerts aufweist, der einen oberen Grenzwert (β) für die Verringerungsrate festlegt.

18. System nach Anspruch 12, 13 oder 15, wobei der Schwellenwert der Hinterradzylinderdruck ist.

## Revendications

1. Système de freinage hydraulique à commande électronique comprenant:
un organe (10) d'actionnement de frein;
un réservoir (52) contenant un liquide de freinage;
un cylindre (20, 21) de roues avant et un cylindre (22, 23) de roues arrières;
une soupape (72, 72) d'augmentation de pression à l'avant et une soupape (73, 73) d'augmentation de pression à l'arrière;
une soupape (76, 76) de diminution de pression à l'avant et une soupape (80, 80) de diminution de pression à l'arrière;
une source de pression (14) hydraulique à commande électrique;
un passage (74, 252) de diminution de pression à l'avant qui relie la soupape (76, 76) de diminution de pression à l'avant au réservoir (52) et un passage (75; 254) de diminution de pression à l'arrière qui relie la soupape (80, 80) de diminution de pression à l'arrière au réservoir (52);
et un dispositif (211, 214) détectant un état de fonctionnement qui détecte un état de fonctionnement de l'organe (10) d'actionnement de frein selon lequel le liquide de frein est
(i) procuré au cylindre (20, 21) de roues avant et au cylindre (22, 23) de roues arrières depuis la source (14) de pression hydraulique à commande électrique par l'actionnement de la soupape (72, 72) d'augmentation de pression à l'avant et de la soupape (72, 73) d'augmentation de la pression à l'arrière, respectivement, de manière à augmenter la pression dans le cylindre (20, 21) de roues avant et dans le cylindre (22, 23) de roues arrières, et
(ii) évacué du cylindre (20, 21) de routes avant et du cylindre (22, 23) de roues arrières vers le réservoir (52) à travers le passage (74; 252) de diminution de pression à l'avant et le passage (78, 254) de diminution de pression à l'arrière, respectivement, en actionnant la soupape (76, 76) de diminution de la pression à l'avant et de la soupape (80, 80) de diminution de la pression à l'arrière de manière à diminuer la pression dans le cylindre (20, 21) de roues avant et dans le cylindre (22, 23) de roues arrières,
**caractérisé en ce que**
le passage de diminution de pression à l'avant et le passage de diminution de pression à l'arrière sont reliés au réservoir l'un indépendamment de l'autre, et un moyen de rétention de la transmission d'impulsion est constitué par l'agencement selon lequel le passage de diminution de la pression à l'avant et le passage de diminution de la pression à l'arrière sont reliés au réservoir l'un indépendamment de l'autre.

2. Système selon la revendication 1, dans lequel l'un parmi le passage de diminution de la pression à l'avant et le passage de diminution de la pression à l'arrière est relié à un passage d'aspiration (60) qui relie un côté d'aspiration de la source de pression hydraulique à commande électrique au réservoir de sorte que ce passage parmi le passage de diminution de la pression à l'avant et le passage de diminution de la pression à l'arrière soit relié au réservoir par l'intermédiaire du passage d'aspiration, et l'autre passage parmi le passage de diminution de la pression à l'avant et le passage de diminution de la pression à l'arrière soit directement relié au réservoir.

3. Système de freinage hydraulique à commande électronique comprenant:
un organe (10) d'actionnement de frein;
un réservoir (52) contenant un liquide de freinage;
un cylindre (20, 21) de roues avant et un cylindre (22, 23) de roues arrières;
une soupape (72, 72) d'augmentation de pression à l'avant et une soupape (73, 73) d'augmentation de pression à l'arrière;
une soupape (76, 76) de diminution de pression à l'avant et une soupape (80, 80) de diminution de pression à l'arrière;
une source de pression (14) hydraulique à commande électrique;
un passage (74, 252) de diminution de pression à l'avant qui relie la soupape (76, 76) de diminution de pression à l'avant au réservoir (52) et un passage (75; 254) de diminution de pression à l'arrière qui relie la soupape (80, 80) de diminution de pression à l'arrière au réservoir (52);
et un dispositif (211, 214) détectant un état de fonctionnement qui détecte un état de fonctionnement de l'organe (10) d'actionnement de frein selon lequel le liquide de frein est
(i) procuré au cylindre (20, 21) de roues avant et au cylindre (22, 23) de roues arrières depuis la source (14) de pression hydraulique à commande électrique par l'actionnement de la soupape (72, 72) d'augmentation de pression à l'avant et de la soupape (72, 73) d'augmentation de la pression à l'arrière, respectivement, de manière à augmenter la pression dans le cylindre (20, 21) de roues avant et dans le cylindre (22, 23) de roues arrières, et
(ii) évacué du cylindre (20, 21) de roues avant et du cylindre (22, 23) de roues arrières vers le réservoir (52) à travers le passage (74; 252) de diminution de pression à l'avant et le passage (78, 254) de diminution de pression à l'arrière, respectivement, en actionnant la soupape (76, 76) de diminution de la pression à l'avant et la soupape (80, 80) de diminution de la pression à l'arrière de manière à diminuer la pression dans le cylindre (20, 21) de roues avant et dans le cylindre (22, 23) de roues arrières,
**caractérisé en ce que**
le passage de diminution de pression à l'avant et le passage de diminution de pression à l'arrière se rejoignent au niveau d'une jonction et s'étendent ensuite sous la forme d'un passage commun qui est relié au réservoir, le système comprenant en outre un dispositif de rétention (260; 280) de la transmission d'impulsion qui est disposé dans au moins l'une d'une partie du passage de diminution de la pression à l'avant et d'une partie du passage de diminution de la pression à l'arrière lesquelles parties sont respectivement sur le côté de la soupape de diminution de la pression à l'avant et de la soupape de diminution de la pression à l'arrière par rapport à la jonction, de sorte à empêcher la transmission de l'impulsion de pression vers le passage de diminution de la pression à l'arrière.

4. Système selon la revendication 3, dans lequel le dispositif de rétention de la transmission d'impulsion comporte une soupape de non retour (260) qui est disposée dans le passage de diminution de la pression à l'arrière et permet l'écoulement du liquide de frein dans une première direction depuis la soupape de diminution de la pression à l'arrière vers le réservoir et empêche l'écoulement du liquide de frein dans une seconde direction opposée à la première direction.

5. Système selon la revendication 3 ou 4, dans lequel le dispositif de rétention de la transmission d'impulsion comporte un dispositif amortisseur (280) qui est disposé dans au moins l'une d'une partie du passage de diminution de la pression à l'avant et d'une partie du passage de diminution de la pression à l'arrière lesquelles parties sont respectivement sur le côté de la soupape de diminution de la pression à l'avant et de la soupape de diminution de la pression à l'arrière par rapport à la jonction, de façon à absorber l'impulsion dans l'au moins une partie.

6. Système selon l'une quelconque des revendication 1 à 5, dans lequel au moins la soupape de diminution de la pression à l'avant et la soupape de diminution de la pression à l'arrière sont fixées à un bloc intégral (39), et une partie extrême du passage de diminution de la pression à l'avant sur le côté de la soupape de diminution de la pression à l'avant et une partie extrême du passage de diminution de la pression à l'arrière sur le côté de la soupape de diminution de la pression à l'arrière sont formées dans le bloc.

7. Système selon la revendication 6,
dans lequel le passage de diminution de la pression à l'avant et le passage de diminution de la pression à l'arrière sont reliés au réservoir l'un indépendamment de l'autre,
dans lequel le bloc est relié au réservoir par l'intermédiaire d'un tube d'échappement (92) et d'un tube d'aspiration (51) constituant une partie du passage d'aspiration,
et dans lequel l'un du passage de diminution de la pression à l'avant et du passage de diminution de la pression à l'arrière est formé dans le bloc et relié à une partie du passage d'aspiration autre que le tube d'aspiration, et l'autre parmi le passage de diminution de la pression à l'avant et du passage de diminution de la pression à l'arrière est principalement constitué par le tube d'échappement.

8. Système selon la revendication 4, dans lequel au moins la soupape de diminution de la pression à l'avant et la soupape de diminution de la pression à l'arrière sont fixées à un bloc intégral (39), et une partie extrême du passage de diminution de la pression à l'avant sur le côté de la soupape de diminution de la pression à l'avant et une partie extrême du passage de diminution de la pression à l'arrière sur le côté de la soupape de diminution de la pression à l'arrière sont formées dans le bloc, et la soupape anti-retour est disposé dans une partie du passage de diminution de la pression à l'arrière laquelle partie est formée dans le bloc.

9. Système selon la revendication 5, dans lequel au moins la soupape de diminution de la pression à l'avant et la soupape de diminution de la pression à l'arrière sont fixées à un bloc intégral (39), et une partie extrême du passage de diminution de la pression à l'avant sur le côté de la soupape de diminution de la pression à l'avant et une partie extrême du passage de diminution de la pression à l'arrière sur le côté de la soupape de diminution de la pression à l'arrière sont formées dans le bloc, et le dispositif amortisseur est relié à au moins l'une de la partie extrême du passage de diminution de la pression à l'avant et de la partie extrême du passage de diminution de la pression à l'arrière.

10. Système selon l'une quelconque des revendications 1 à 9, dans lequel le moyen de rétention de la transmission d'impulsion comporte une partie (S11-13, S21-23) empêchant la diminution de la pression qui empêche un actionnement d'au moins l'une de la soupape de diminution de la pression à l'avant et de la soupape de diminution de la pression à l'arrière lorsque la pression hydraulique est réduite à la fois dans le cylindre de roues avant et dans le cylindre de roues arrières.

11. Système selon la revendication 10, qui est installé dans un véhicule automobile, et dans lequel la partie empêchant la diminution de la pression fonctionne alors que le véhicule automobile est stationnaire.

12. Système selon la revendication 10 ou 11, dans lequel la partie empêchant la diminution de la pression comporte une partie (S11-13) interdisant la diminution de la pression à l'arrière qui interdit un actionnement de la soupape de diminution de la pression à l'arrière jusqu'à ce que la pression hydraulique (Pfwc) du cylindre de roues avant baisse jusqu'à ou en dessous d'une valeur seuil qui est déterminée selon la pression hydraulique (Prwc) du cylindre de roues arrières.

13. Système selon la revendication 12, dans lequel la partie interdisant la diminution de la pression à l'arrière fonctionne lorsqu'un taux cible, par lequel la pression (Pfwc) dans le cylindre de roues avant doit être abaissée, et qui est déterminé selon l'état d'actionnement de l'organe d'actionnement de frein, n'est pas inférieur à un taux prédéterminé (α), et ne fonctionne pas lorsque le taux cible est inférieur au taux prédéterminé.

14. Système selon la revendication 10 ou 11, dans lequel la partie empêchant la diminution de la pression comporte une partie (S21-S23) limitant le taux de diminution à l'avant qui limite un taux de diminution par lequel la pression dans le cylindre de roues avant est abaissée par un actionnement de la soupape de diminution de la pression à l'avant.

15. Système selon la revendication 14, dans lequel la partie limitant le taux de diminution à l'avant fonctionne pour limiter le taux de diminution jusqu'à ce que la pression dans le cylindre de roues avant baisse jusqu'à ou en dessous d'une valeur seuil qui est déterminée selon la pression dans le cylindre de roues arrières.

16. Système selon la revendication 14 ou 15, dans lequel la partie limitant le taux de diminution à l'avant fonctionne lorsqu'un taux cible par lequel la pression dans le cylindre de roues avant doit être abaissée est supérieur à un taux prédéterminé (α).

17. Système selon l'une quelconque des revendications 14-16, dans lequel la partie limitant le taux de diminution à l'avant comporte une partie (S21-S23) réglant une limite supérieure qui règle une limite supérieure (β) pour le taux de diminution.

18. Système selon la revendication 12, 13, ou 15, dans lequel la valeur seuil est la pression dans le cylindre de roues arrières.
